# EUROPÄISCHE PATENTSCHRIFT

(11) **EP 1 537 644 B1**
(45) Veröffentlichungstag und Bekanntmachung des Hinweises auf die Patenterteilung: **10.12.2014**
(21) Anmeldenummer: 03729811.4
(22) Anmeldetag: 11.03.2003
(51) Int. Cl.: H02K 11/00, H02K 11/02, H02K 23/66

(54) **AUFNAHME ZUM BEFESTIGEN EINES BAUTEILS AN EINEM BÜRSTENTRÄGER**
RECEIVING ELEMENT FOR FIXING A COMPONENT TO A BRUSH CARRIER
LOGEMENT POUR FIXER UN COMPOSANT SUR UN PORTE-BALAIS

(30) Priorität: 28.08.2002 DE 10239434
(43) Veröffentlichungstag der Anmeldung: 08.06.2005
(73) Patentinhaber: ROBERT BOSCH GMBH, 70442 Stuttgart (DE)
(72) Erfinder: MEYER, Christian, 76228 Karlsruhe-Wolfartsweier (DE)
(86) Internationale Anmeldenummer: PCT/DE2003/000769
(87) Internationale Veröffentlichungsnummer: WO 2004/021545

(56) Entgegenhaltungen:
- EP-A- 0 511 876
- DE-A- 3 730 007
- US-A- 5 610 467
- US-A- 5 942 819
- US-B1- 6 201 326

## Beschreibung

### Stand der Technik

Die vorliegende Erfindung betrifft eine Befestigungsanordnung zur Befestigung eines Bauteils an einem Bürstenträger für eine elektrische Maschine.

Bürstenträger werden beispielsweise in elektrischen Maschinen, wie z.B. Kommutator-Motoren oder Schleifring-Motoren, verwendet, um eine elektrische Kontaktierung über am Bürstenträger angeordnete Bürsten zu ermöglichen. Häufig dienen Bürstenträger neben der Befestigung der Bürsten auch zur Befestigung weiterer Bauteile der elektrischen Maschine, wie beispielsweise Drosseln oder Temperatursensoren. Wenn hierbei der Bürstenträger beispielsweise als Spritzgussteil hergestellt wird, werden diese Bauteile gegebenenfalls in den Bürstenträger eingespritzt. Weiterhin ist bekannt, derartige Bauteile auf einen Bürstenträger aufzustecken und zu verclipsen oder derartige Bauteile aufzustecken und durch Warmprägen oder Warmschweißen mit dem Bürstenträger zu verbinden. Diese bekannten Befestigungsmöglichkeiten sind jedoch sehr teure und arbeitsaufwendige Verfahren. Weiterhin sind derartige Bürstenträger mit zusätzlichen Bauteilen nicht für eine erhöhte Schwing- und/oder Temperaturbelastung geeignet, da durch die freiliegende Befestigung der Bauteile an dem Bürstenträger diese Bauteile leicht zum Schwingen angeregt werden können.

Mit der US 5942819 A ist ein Elektromotor mit einem Bürstenhalterbauteil bekannt geworden, bei dem Drosselelemente in konischen Ausnehmungen angeordnet sind. Die Anschlussleitungen der Drosselelemente sind dabei direkt mit einer Leiterplatte kontaktiert.

Die US 5610467 A zeigt eine Bürstenhalteranordnung auf der zur elektromagnetischen Entstörung Drosselelemente angeordnet sind.

Mit der EP 0511876 A2 ist ein Gehäusedeckel eines Elektromotors bekannt geworden, in dem Entstördrosseln in Aussparungen des Gehäusedeckels eingefügt sind.

### Vorteile der Erfindung

Die erfindungsgemäße Befestigungsanordnung zur Befestigung eines Bauteils an einem Bürstenträger mit den Merkmalen des Anspruchs 1 weist demgegenüber den Vorteil auf, dass ein Bauteil einfach und kostengünstig am Bürstenträger befestigt werden kann. Weiterhin kann das Bauteil derart befestigt werden, dass auch bei einer erhöhten Schwingbelastung das Bauteil nicht beschädigt werden kann bzw. vom Bürstenträger gelöst werden kann. Hierzu ist die Befestigungsanordnung erfindungsgemäß integral mit dem Bürstenträger gebildet und weist wenigstens einen sich verjüngenden Bereich auf. An diesem sich verjüngenden Bereich liegt dann das am Bürstenträger zu befestigende Bauteil im montierten Zustand an. Dadurch kann sichergestellt werden, dass ein Schwingen des Bauteils verhindert wird. Durch die sich verjüngende Ausbildung des Kontaktbereichs wird ein Ausgleich für eventuell im Toleranzbereich liegende Abweichungen des Bauteils von seinen geometrischen Abweichungen ermöglicht. Mit anderen Worten werden herstellungsbedingte Maßabweichungen des Bauteils durch den sich verjüngenden Bereich während der Montage ausgeglichen. Im montierten Zustand ermöglicht der sich verjüngende Bereich des Bürstenträgers einen spielfreien Sitz des Bauteils am Bürstenträger, sodass eine Schwingungsanregung des Bauteils unterbunden werden kann.

Um auch eine einfache und schwingungsfreie Befestigungsmöglichkeit für elektrische Anschlussverbindungen des Bauteils bereitzustellen, sind am Bürstenträger im Wesentlichen U-förmige Haltevorrichtungen angeordnet. Die elektrischen Anschlussverbindungen, welche beispielsweise ein Draht o.ä. sein können, sind dabei zwischen die beiden Schenkel der U-förmigen Haltevorrichtung eingelegt. Es sei angemerkt, dass die beiden Schenkel dabei parallel zueinander angeordnet sein können oder auch derart, dass die beiden Schenkel aufeinander zulaufen, sodass sich ein sich verjüngender Aufnahmebereich für die Anschlussverbindungen, d.h. ein im Wesentlichen V-förmiger Bereich, ergibt.

Um eine besonders einfache Positionierung des Bauteils am Bürstenträger zu ermöglichen, ist der sich verjüngende Bereich als eine sich verjüngende, insbesondere kegelförmige, Ausnehmung im Bürstenträger ausgebildet. Die Ausnehmung kann dabei beispielsweise topfförmig oder als sich verjüngende Durchgangsöffnungen ausgebildet sein.

Gemäß einer bevorzugten Ausgestaltung der vorliegenden Erfindung ist der sich verjüngende Bereich der Befestigungsanordnung an wenigstens einer vom Bürstenträger vorstehenden Erhebung ausgebildet. Besonders bevorzugt ist der sich verjüngende Bereich dabei an zwei sich im Wesentlichen um 180° gegenüberliegenden vorstehenden Erhebungen ausgebildet.

Um eine besonders gute Fixierung des Bauteils am sich verjüngenden Bereich des Bürstenträgers zu ermöglichen, ist am sich verjüngenden Bereich wenigstens ein rippenförmiger Vorsprung ausgebildet.

Weiterhin bevorzugt ist, wenn an dem als sich verjüngende Ausnehmung ausgebildeten sich verjüngenden Bereich eine über die Tiefe der Ausnehmung verlaufende seitliche Aussparung vorgesehen ist. Diese Aussparung dient zur Hochführung einer elektrischen Anschlussverbindung des Bauteils. Dadurch ist es möglich, Bauteile wie z.B. eine Drossel, welche einen ersten Anschluss in Axialrichtung an einer Seite und einen zweiten Anschluss an einer gegenüberliegenden Seite aufweist, an einem Bürstenträger derart zu befestigen, dass die beiden Anschlüsse an der gleichen Seite des Bürstenträgers angeordnet sind und keine Durchgangsöffnungen im Bürstenträger vorgesehen werden müssen. Dadurch ergibt sich insbesondere der Vorteil, dass derartige Bauteile an einer Seite des Bürstenträgers für eine elektrische Kontaktierung verschweißt werden können, sodass sich signifikante Reduzierungen der Herstellkosten und der Herstellzeit ergeben.

Gemäß einem besonders bevorzugten Ausführungsbeispiel der vorliegenden Erfindung ist am Bürstenträger eine Vergusswanne integral ausgebildet. Eine Vergusswanne kann beispielsweise am Bürstenträger durch einen integral gebildeten umlaufenden Rand bereitgestellt werden. Das am Bürstenträger zu montierende Bauteil kann dabei durch zumindest teilweises Umgießen des Bauteils und/oder durch zumindest teilweises Umgießen von elektrischen Anschlussleitungen des Bauteils in der Vergusswanne am Bürstenträger fixiert werden. Besonders bevorzugt ist dabei erfindungsgemäß die Befestigungsanordnung in der Vergusswanne angeordnet oder die elektrischen Anschlussverbindungen des Bauteils werden durch den Bürstenträger hindurchgeführt und münden in einer an der zur Montagestelle des Bauteils entgegengesetzten Seite in der Vergusswanne.

Das am Bürstenträger zu befestigende Bauteil ist vorzugsweise eine Drossel oder ein Temperatursensor, insbesondere ein NTC- oder PTC-Temperatursensor.

### Zeichnungen

Mehrere Ausführungsbeispiele der Erfindung sind in der Zeichnung dargestellt und werden im Folgenden näher beschrieben. Es zeigen:
- Figur 1: eine schematische, perspektivische Ansicht eines Bürstenträgers mit einer Befestigungsanordnung gemäß einem ersten und einem zweiten Ausführungsbeispiel der vorliegenden Erfindung,
- Figur 2: eine schematische, perspektivische Ansicht des Bürstenträgers von der entgegengesetzten Seite von Figur 1,
- Figur 3: eine schematische, perspektivische Ansicht einer Befestigungsanordnung mit montiertem Bauteil gemäß einem ersten Ausführungsbeispiel der vorliegenden Erfindung,
- Figur 4: eine schematische, perspektive Ansicht der Befestigungsanordnung von Figur 3 ohne montiertes Bauteil,
- Figur 5: eine schematische, perspektivische Ansicht einer Befestigungsanordnung gemäß einem zweiten Ausführungsbeispiel mit montiertem Bauteil, und
- Figur 6: eine schematische, perspektivische Ansicht der anderen Seite des Bürstenträgers des in Figur 5 dargestellten Bauteils.

### Beschreibung der Ausführungsbeispiele

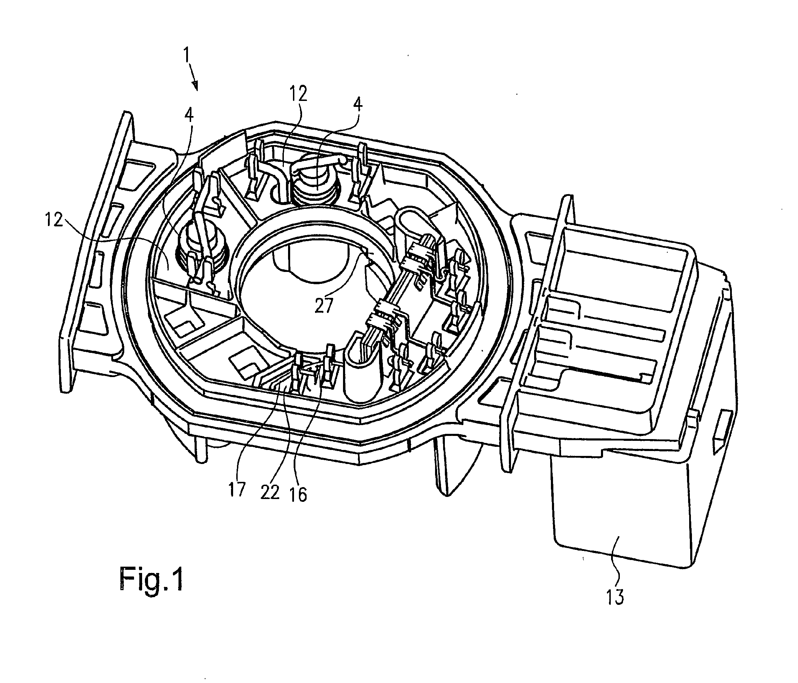

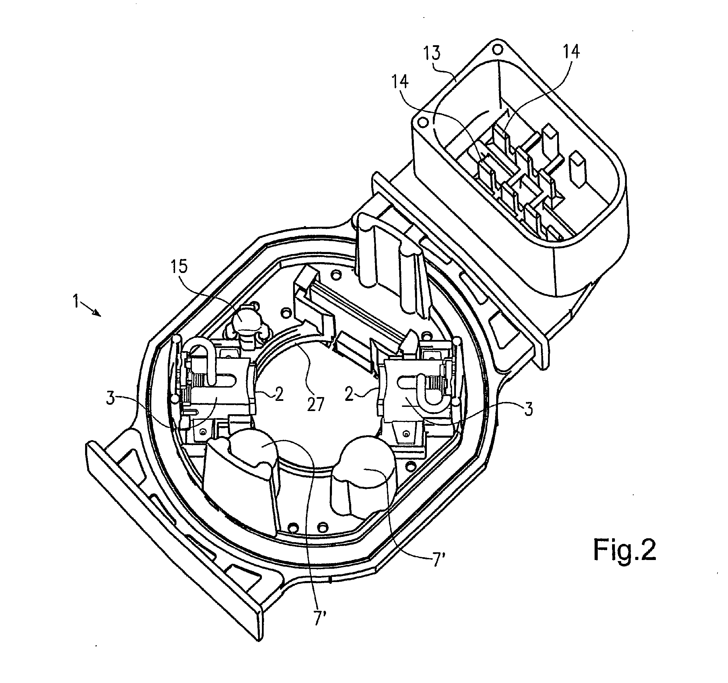

In den Figuren 1 und 2 ist ein Bürstenträger 1 dargestellt, welcher zwei unterschiedliche Befestigungsanordnungen zur Befestigung von verschiedenen Bauteilen aufweist. Die beiden verschiedenen Bauteile sind einerseits zwei Drosseln 4 und andererseits ein Temperatursensor 15. Der Bürstenträger 1 weist einen bekannten Grundaufbau in Form einer im Wesentlichen flachen Grundplatte mit einer mittleren Aussparung 27 sowie einem integral gebildeten elektrischen Steckanschluss 13 mit einer Vielzahl von elektrischen Kontakten 14 auf. Wie insbesondere aus Figur 2 ersichtlich ist, sind am Bürstenträger 1 zwei um ca. 180° einander gegenüber liegende Bürsten 2 angeordnet, welche jeweils in einem Köcher 3 aufgenommen sind. In bekannter Weise ist im montierten Zustand des Bürstenträgers 1 eine Rotorwelle durch die mittlere Aussparung 27 hindurchgeführt und die Bürsten 2 stehen beispielsweise in Kontakt mit einem Kommutator.

Der Bürstenträger 1 ist aus einem isolierenden Material, wie beispielsweise Kunststoff, hergestellt und kann z.B. mittels Spritzgießen hergestellt werden. Neben der Hauptfunktion des Bürstenträgers 1, nämlich dem Halten der Bürsten, sind am Bürstenträger 1 gemäß der vorliegenden Erfindung noch zusätzlich integral gebildete Befestigungsanordnungen zur Befestigung weiterer Bauteile am Bürstenträger 1 vorgesehen.

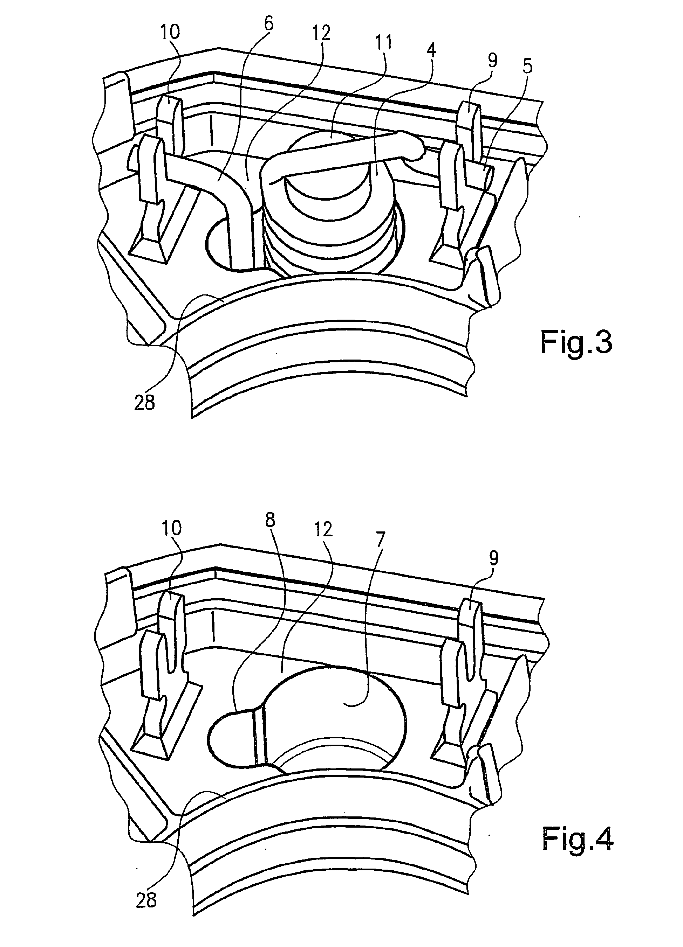

Nachfolgend wird insbesondere unter Bezugnahme auf die Figuren 3 und 4 eine Befestigungsanordnung gemäß einem ersten Ausführungsbeispiel der vorliegenden Erfindung beschrieben.

Wie aus Figur 3 ersichtlich ist, ist das am Bürstenträger 1 zu befestigende Bauteil eine Drossel 4. Die Drossel 4 besteht aus einem zylinderförmig aufgewickelten Draht, in welchem ein zylindrischer Eisenkern 11 angeordnet ist (vgl. Figur 3). Zur Befestigung der Drossel 4 ist im Bürstenträger 1 integral eine im Wesentlichen topfförmige Ausnehmung 7 gebildet. Die topfförmige Ausnehmung 7 ist dabei derart gebildet, dass sie sich in Richtung des Bodens des Topfes verjüngt. Diese Verjüngung stellt sicher, dass die Drossel 4 im montierten Zustand in Kontakt mit dem sich verjüngenden Bereich gelangt und somit sicher am Bürstenträger 1 positioniert ist.

In Figur 2 ist die Rückseite 7' der topfförmigen Aussparung 7 erkennbar, welche von der flachen Grundplatte des Bürstenträgers 1 vorsteht.

Wie weiterhin aus Figur 4 ersichtlich ist, ist an einem Randbereich der topfförmigen Ausnehmung 7 eine Aussparung 8 vorgesehen, welche vom Boden der topfförmigen Ausnehmung nach oben verläuft. Diese Ausnehmung 8 dient zur Rückführung eines Leitungsanschlusses 6 der Drossel 4 (vgl. Figur 3). Durch diese Maßnahme ist es möglich, dass die beiden Leitungsanschlüsse 5, 6 der Drossel 4 an der gleichen Seite des Bürstenträgers 1 angeordnet sind. Durch diese Rückführung des Leitungsanschlusses 6 zur gleichen Seite des Bürstenträgers 1 ist es somit möglich, dass die Kontakte für die Drossel 4 an einer Seite des Bürstenträgers 1 schweißbar sind, und nicht mehr wie im Stand der Technik, von zwei unterschiedlichen Seiten des Bürstenträgers 1 zu schweißen sind. Dadurch können große herstellungsbedingte Vorurteile und Kostensenkungen erreicht werden.

Wie in Figur 3 gezeigt, sind die Leitungsanschlüsse 5, 6 der Drossel 4 jeweils in U-förmigen Haltevorrichtungen 9, 10 angeordnet. Diese Haltevorrichtungen 9, 10 dienen einerseits zum Halten der Leitungsanschlüsse 5, 6 für eine Kontaktierung und andererseits beeinflussen die Haltevorrichtungen 9, 10 das Schwingungsverhalten der Drossel 4 im montierten Zustand positiv. Da die Drossel 4 im montierten Zustand an dem sich verjüngenden Wandbereich der topfförmigen Ausnehmung 7 anliegt, kann das Schwingungsverhalten der Drossel 4 während des Betriebes der elektrischen Maschine weiter verbessert werden. Weiterhin wird dadurch ein Verkleben der Leitungsanschlüsse 5, 6 in den Haltevorrichtungen 9, 10 von einer Seite möglich, sodass auf einfache Weise eine Fixierung der Leitungsanschlüsse 5, 6 für ein anschließendes sicheres Kontaktieren ermöglicht wird.

Wie weiterhin in den Figuren 3 und 4 gezeigt, ist die Befestigungsanordnung zur Befestigung der Drossel 4 von einem umlaufenden Rand 28 vollständig umgeben. Somit wird eine Vergusswanne 12 um die Befestigungsanordnung ausgebildet, sodass nach erfolgter Montage der Drossel 4 in der topfförmigen Ausnehmung 7 und den Haltevorrichtungen 9, 10 zur endgültigen Fixierung ein Vergießen der montierten Drossel 4 in der Vergusswanne 12 erfolgen kann. Dadurch kann die Schwingungsfestigkeit der Drossel im Bürstenträger 1 weiter verbessert werden.

Wie aus Figur 1 ersichtlich ist, sind im vorliegenden Ausführungsbeispiel zwei Drosseln 4 vorgesehen, welche zueinander benachbart angeordnet sind. Es sei angemerkt, dass durch die Anordnung auch auf den in Figur 1 dargestellten trennenden Rand der beiden Gießwannen 12 verzichtet werden kann und so ein noch schnelleres Vergießen in einer großen Vergusswanne möglich wäre, in welcher zwei Befestigungsanordnungen für die beiden Drosseln angeordnet wären.

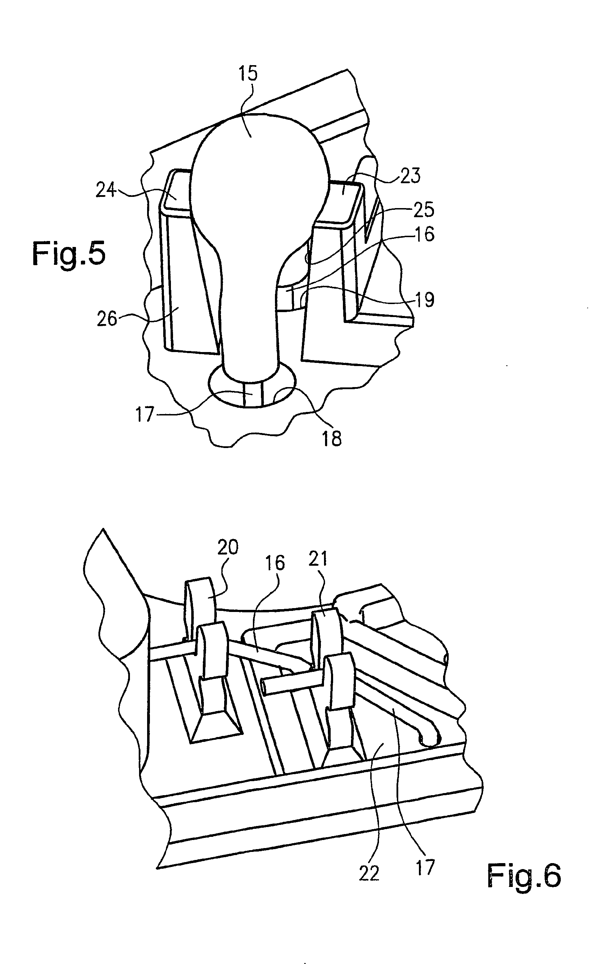

In den Figuren 5 und 6 ist eine Befestigungsanordnung zur Befestigung eines Bauteils an einem Bürstenträger 1 gemäß einem zweiten Ausführungsbeispiel der Erfindung dargestellt. Wie insbesondere aus Figur 5 ersichtlich ist, ist die Befestigungsanordnung durch zwei Erhebungen 23 und 24 gebildet, welche einander entgegengesetzt angeordnet sind. An ihren zueinander gerichteten Seiten sind die beiden Erhebungen 23, 24 derart ausgebildet, dass sie jeweils sich verjüngende Bereiche 25 bzw. 26 aufweisen. Dadurch ergibt sich ein im Wesentlichen trichterförmiger Zwischenraum zwischen den Erhebungen 23, 24, in welchem eine Befestigung des Bauteils möglich ist.

Wie in Figur 5 dargestellt, ist das Bauteil im zweiten Ausführungsbeispiel ein Temperatursensor 15. Der Temperatursensor 15 weist eine im Wesentlichen kugelförmige Außengestalt auf und umfasst zwei Leitungsanschlüsse 16, 17. Der eigentliche Temperatursensor ist in der kugelförmigen Umhüllung angeordnet, welche beispielsweise durch Tauchen des Temperatursensors in ein flüssiges Harz hergestellt wird. Der Temperatursensor 15 wird nun derart am Bürstenträger 1 befestigt, dass er zwischen den beiden sich verjüngenden Bereichen 25, 26 der Erhebungen 23, 24 leicht verklemmt werden kann. Somit wird ebenfalls ein deutlich verbessertes Schwingungsverhalten des Temperatursensors 15 als im Stand der Technik ermöglicht, bei dem der Temperatursensor 15 freiliegend befestigt ist.

Weiterhin sind am Bürstenträger 1 zwei Durchgangslöcher 18, 19 ausgebildet, durch welche die Leitungen 16, 17 des Temperatursensors 15 hindurchgeführt sind. Dadurch wird der Anschluss des Temperatursensors 15 an die entgegengesetzte Seite des Bürstenträgers 1 gelegt (vgl. Figur 1). Diese Maßnahme ermöglicht es, dass, wie in Figur 1 gezeigt, alle am Bürstenträger 1 zu kontaktierenden Stellen an einer Seite des Bürstenträgers 1 angeordnet sind, sodass eine besonders rationelle und gut automatisierbare Herstellung des Bürstenträgers 1 an Bauteilen möglich wird.

Wie in Figur 6 gezeigt, münden die beiden Leitungen 16, 17 an der entgegengesetzten Seite und werden in Haltevorrichtungen 20, 21 angeordnet, welche den vorher beschriebenen Haltevorrichtungen 9, 10 entsprechen. In diesen Haltevorrichtungen 20, 21 können die Leitungen 16, 17 ebenfalls, z.B. mittels Kleben oder Klemmen, fixiert werden. Weiterhin können die beiden Leitungen 16, 17 in der Vergusswanne 22 wie im ersten Ausführungsbeispiel durch Eingießen eines Harzes in die Vergusswanne 22 abschließend fixiert werden. Dadurch wird die Schwingungsfestigkeit des Temperatursensors 15 weiter verbessert.

Somit kann erfindungsgemäß eine verbesserte Schwingungsfestigkeit von Anbauteilen am Bürstenträger 1, wie beispielsweise einer Drossel 4 und einem Temperatursensor 15, durch Befestigung der Bauteile 4, 15 an sich verjüngenden Bereichen, welche integral am Bürstenträger 1 gebildet sind, verbessert werden. Eine weitere Verbesserung der Schwingungsfestigkeit der Bauteile ergibt sich durch ein Vergießen der Bauteile bzw. von Leitungen in integral am Bürstenträger 1 gebildeten Vergusswannen 12 bzw. 22. Somit kann erfindungsgemäß eine Bewegung bzw. ein Spiel der Bauteile 4, 15 während des Betriebes der elektrischen Maschine verhindert werden, sodass es nicht mehr zu einem Funktionsausfall der elektrischen Maschine auf Grund von beschädigten Bauteilen infolge einer Schwingbelastung kommt.

Weiterhin ermöglichen die sich verjüngenden Bereiche am Bürstenträger zur Befestigung der Bauteile auch eine verbilligtere Herstellung der Bauteile 4, 15, da nicht mehr die engsten Einbautoleranzen für diese Bauteile gewählt werden müssen. Abweichungen können bei der Montage durch die sich verjüngenden Bereiche 7 bzw. 25, 26 kompensiert werden. Die sich verjüngenden Bereiche gewährleisten dabei, dass kein Spiel zwischen dem Bauteil und dem Bürstenträger 1 vorhanden ist.

## Patentansprüche

1. Befestigungsanordnung zur Befestigung eines Bauteils (4; 15) an einem Bürstenträger (1) für eine elektrische Maschine, wobei die Befestigungsanordnung integral mit dem Bürstenträger (1) gebildet ist und wenigstens einen sich verjüngenden Bereich (7; 25, 26) aufweist, an welchem das Bauteil (4; 15) im montierten Zustand anliegt, **dadurch gekennzeichnet, dass** elektrische Anschlussverbindungen (5, 6; 16, 17) für das Bauteil (4; 15) in einer im Wesentlichen U-förmigen Haltevorrichtung (9, 10; 20, 21) angeordnet sind.

2. Befestigungsanordnung nach Anspruch 1, **dadurch gekennzeichnet, dass** der sich verjüngende Bereich (7) als sich verjüngende Ausnehmung, insbesondere als sich verjüngende kegelförmige Ausnehmung, im Bürstenträger (1) ausgebildet ist.

3. Befestigungsanordnung nach Anspruch 1, **dadurch gekennzeichnet, dass** der sich verjüngende Bereich (25, 26) an wenigstens einer vom Bürstenträger (1) vorstehenden Erhebung (23, 24) ausgebildet ist.

4. Befestigungsanordnung nach Anspruch 3, **dadurch gekennzeichnet, dass** der sich verjüngende Bereich (25, 26) durch zwei sich im Wesentlichen um 180° gegenüberliegenden verjüngenden Bereichen (25, 26) gebildet ist.

5. Befestigungsanordnung nach einem der Ansprüche 1 bis 4, **dadurch gekennzeichnet, dass** an dem sich verjüngenden Bereich (7; 25, 26) wenigstens ein rippenförmiger Vorsprung zur Fixierung eines am sich verjüngenden Bereich anliegenden Bauteils (4; 15) ausgebildet ist.

6. Befestigungsanordnung nach Anspruch 2, **dadurch gekennzeichnet, dass** an der sich verjüngenden Ausnehmung (7) eine am Rand der Ausnehmung gebildete zusätzliche Aussparung (8) zur Hochführung einer elektrischen Anschlussverbindung (5) des Bauteils (4) ausgebildet ist.

7. Befestigungsanordnung nach einem der Ansprüche 1 bis 6, **dadurch gekennzeichnet, dass** am Bürstenträger (1) eine durch einen umlaufenden Rand integral mit dem Bürstenträger (1) ausgebildete Vergusswanne (12; 22) ausgebildet ist, um das am Bürstenträger (1) montierte Bauteil (4; 15) zumindest durch teilweises Umgießen des Bauteils und/oder elektrischer Anschlussleitungen des Bauteils in der Vergusswanne (12; 22) am Bürstenträger (1) zu befestigen.

8. Befestigungsanordnung nach Anspruch 7, **dadurch gekennzeichnet, dass** die Befestigungsanordnung in der Vergusswanne (12) angeordnet ist oder dass elektrische Anschlussverbindungen (16, 17) des Bauteils (15) durch den Bürstenträger (1) hindurchgeführt sind und in eine Vergusswanne (22) an der entgegengesetzten Seite des Bürstenträgers (1) münden.

9. Befestigungsanordnung nach einem der Ansprüche 1 bis 8, **dadurch gekennzeichnet, dass** das am Bürstenträger (1) zu befestigende Bauteil ein Temperatursensor (15) oder eine Drossel (4) ist.

## Claims

1. Fastening arrangement for fastening a component (4; 15) to a brush support (1) for an electrical machine, wherein the fastening arrangement is integrally formed with the brush support (1) and has at least one tapering region (7; 25, 26) against which the component (4; 15) bears in the mounted state, **characterized in that** electrical terminal connections (5, 6; 16, 17) for the component (4; 15) are arranged in a substantially U-shaped holding apparatus (9, 10; 20, 21).

2. Fastening arrangement according to Claim 1, **characterized in that** the tapering region (7) is in the form of a tapering recess, in particular in the form of a tapering conical recess, in the brush support (1).

3. Fastening arrangement according to Claim 1, **characterized in that** the tapering region (25, 26) is formed on at least one protrusion (23, 24) which projects from the brush support (1).

4. Fastening arrangement according to Claim 3, **characterized in that** the tapering region (25, 26) is formed by two tapering regions (25, 26) which are situated opposite one another substantially through 180°.

5. Fastening arrangement according to one of Claims 1 to 4, **characterized in that** at least one rib-like projection for fixing a component (4; 15) which bears against the tapering region (7; 25, 26) is formed on the tapering region.

6. Fastening arrangement according to Claim 2, **characterized in that** an additional cutout (8), which is formed on the edge of the recess, for vertically guiding an electrical terminal connection (5) of the component (4) is formed on the tapering recess (7).

7. Fastening arrangement according to one of Claims 1 to 6, **characterized in that** a potting trough (12; 22) which is integrally formed with the brush support (1) by a circumferential edge is formed on the brush support (1) in order to fasten the component (4; 15), which is mounted on the brush support (1), to the brush support (1) at least by partial encapsulation of the component and/or electrical terminal connections of the component in the potting trough (12; 22).

8. Fastening arrangement according to Claim 7, **characterized in that** the fastening arrangement is arranged in the potting trough (12), or **in that** electrical terminal connections (16, 17) of the component (15) are guided through the brush support (1) and issue into a potting trough (22) on the opposite side of the brush support (1).

9. Fastening arrangement according to one of Claims 1 to 8, **characterized in that** the component which is to be fastened to the brush support (1) is a temperature sensor (15) or a choke (4).

## Revendications

1. Système de fixation pour fixer un composant (4 ; 15) sur un porte-balais (1) pour une machine électrique, le système de fixation étant formé intégralement avec le porte-balais (1) et présentant au moins une région se rétrécissant (7 ; 25, 26) contre laquelle s'applique le composant (4 ; 15) dans l'état monté, **caractérisé en ce que** des connexions de raccordement électriques (5, 6 ; 16, 17) pour le composant (4 ; 15) sont disposées dans un dispositif de retenue essentiellement en forme de U (9, 10 ; 20, 21).

2. Système de fixation selon la revendication 1, **caractérisé en ce que** la région se rétrécissant (7) est réalisée sous forme d'évidement se rétrécissant, en particulier sous forme d'évidement se rétrécissant de forme conique, dans le porte-balais (1).

3. Système de fixation selon la revendication 1, **caractérisé en ce que** la région se rétrécissant (25, 26) est réalisée au niveau d'au moins un rehaussement (23, 24) faisant saillie depuis le porte-balais (1).

4. Système de fixation selon la revendication 3, **caractérisé en ce que** la région se rétrécissant (25, 26) est formée par deux régions (25, 26) se rétrécissant opposées essentiellement de 180°.

5. Système de fixation selon l'une quelconque des revendications 1 à 4, **caractérisé en ce qu'**au moins une saillie en forme de nervure est réalisée au niveau de la région se rétrécissant (7 ; 25, 26) pour fixer un composant (4 ; 15) s'appliquant contre la région se rétrécissant.

6. Système de fixation selon la revendication 2, **caractérisé en ce qu'**un évidement supplémentaire (8) est réalisé au niveau du bord de l'évidement pour guider vers le haut une connexion de raccordement électrique (5) du composant (4).

7. Système de fixation selon l'une quelconque des revendications 1 à 6, **caractérisé en ce qu'**une coque de coulée (12 ; 22) réalisée intégralement avec le porte-balais (1) par un bord périphérique est réalisée sur le porte-balais (1), afin de fixer sur le porte-balais (1) le composant (4 ; 15) monté sur le porte-balais (1) au moins par coulée partielle du composant et/ou des conduites de raccordement électriques du composant dans la coque de coulée (12 ; 22).

8. Système de fixation selon la revendication 7, **caractérisé en ce que** le système de fixation est disposé dans la coque de coulée (12) ou **en ce que** des connexions de raccordement électriques (16, 17) du composant (15) sont guidées à travers le porte-balais (1) et débouchent dans une coque de coulée (22) au niveau du côté opposé du porte-balais (1).

9. Système de fixation selon l'une quelconque des revendications 1 à 8, **caractérisé en ce que** le composant devant être fixé au porte-balais (1) est un capteur de température (15) ou une bobine (4).
